# EUROPÄISCHE PATENTANMELDUNG

(11) **EP 4 617 209 A1**
(43) Veröffentlichungstag der Anmeldung: **17.09.2025**
(21) Anmeldenummer: 24210198.8
(22) Anmeldetag: 31.10.2024
(51) Int. Cl.: B65G 53/56, B65G 51/24

(54) **ROHRWEICHE FÜR STRÖMUNGSBASIERTE FÖRDERSYSTEME**

(30) Priorität: 14.03.2024 DE 202024000512 U
(71) Anmelder: Ewering Farm Technology GmbH & Co. KG, 48727 Billerbeck (DE)
(72) Erfinder: STUPAK, dmitrij, 48683 Ahaus (DE)
(74) Vertreter: Taruttis, Tilman

(57) **Zusammenfassung**

Die Erfindung betrifft eine Rohrweiche (1) für strömungsbasierte Fördersysteme, insbesondere für pneumatische Systeme, zur Förderung von Schüttgut, umfassend ein Schaltrohr (9) mit einem ersten Ende (10) und einem von dem ersten Ende abgewandten zweiten, freien Ende (11), sowie einen ersten Rohranschluss (5) und einen zweiten Rohranschluss (6), die in einer Führungsfläche (4) vorgesehen sind. Das Schaltrohr (9) ist schwenkbar gelagert, um das freie Ende (11) des Schaltrohrs (9) vor dem ersten Rohranschluss (5) und dem zweiten Rohranschluss (6) zu positionieren. Ein Schlittenelement (15) umgibt das Schaltrohr (9) und weist zum freien Ende (11) des Schaltrohres (9) hin ein offenes Ende (16) auf. Eine Vorspanneinrichtung (28) drängt das Schlittenelement gegen die Führungsfläche (4).

## Beschreibung

### TECHNISCHES GEBIET

Die Erfindung betrifft eine Rohrweiche für strömungsbasierte Fördersysteme, insbesondere für pneumatische Fördersysteme, zur Förderung von Schüttgut.

### HINTERGRUND DER ERFINDUNG

Rohrweichen für strömungsbasierte Fördersysteme finden vielseitige Einsatzmöglichkeiten, unter anderem in Fördersystemen der Industrie, Landwirtschaft und bei der Fütterung von Nutztieren. Sie ermöglichen eine gezielte Steuerung des Transports von Schüttgut, wie Futter, Einstreu oder anderen körnigen Materialien, und sind essenzielle Komponenten in Fördersystemen, die einen effizienten, flexiblen Materialfluss gewährleisten.

Bekannte Rohrweichen umfassen ein Schaltrohr, das mit einem ersten Ende an ein Förderrohr angeschlossen ist und das ein zweites Ende aufweist, das zunächst frei ist. Von dem Förderrohr kann das Schüttgut in die Rohrweiche gefördert werden. Ferner sind wenigstens zwei Anschlussrohre vorgesehen, die zu unterschiedlichen Rohrleitungen bzw. Zielorten führen, wie beispielsweise Futtertröge oder Einstreubehälter. Das freie Ende des Schaltrohrs ist durch Umschalten bzw. Verschwenken des Schaltrohres wahlweise vor einem der Anschlussrohre positionierbar, wodurch eine gezielte Lenkung des Schüttguts zu verschiedenen Zielorten ermöglicht wird. Die Förderung des Schüttguts in den Rohren erfolgt wahlweise durch Über- oder Unterdruck in den Rohren, was ein flexibles und bedarfsgerechtes Verbringen des Schüttguts gewährleistet.

Herausforderungen bei Rohrweichen bestehen vor allem beim Umschalten des Schaltrohrs. Die Positionierung des freien Endes des Schaltrohres an den Öffnungen der Anschlussrohre kann nicht immer einen dichten Anschluss an die Anschlussrohre gewährleisten. Dies kann dazu führen, dass Schüttgut austritt, was zur Materialverlust führen kann, sondern auch die Effizienz des Systems beeinträchtigt, wenn zu hohe Druckverluste auftreten.

Es ist daher Aufgabe der vorliegenden Erfindung, eine Rohrweiche vorzuschlagen, mittels derer der Transport von Schüttgut effizienter gesteuert werden kann.

### ZUSAMMENFASSUNG DER ERFINDUNG

Die der Erfindung zugrunde liegende Aufgabe wird gelöst mit einer Rohrweiche gemäß Anspruch 1. Weitere vorteilhafte Ausgestaltungen der Erfindung sind in den abhängigen Ansprüchen und der Beschreibung angegeben. Die in den Ansprüchen und in der Beschreibung dargestellten Merkmale sind in beliebiger, technologisch sinnvoller Weise miteinander kombinierbar.

Die erfindungsgemäße Rohrweiche umfasst ein Schaltrohr mit einem ersten Ende und einem von dem ersten Ende abgewandten zweiten, freien Ende, sowie einen ersten Rohranschluss und einen zweiten Rohranschluss, die in einer Führungsfläche vorgesehen sind; wobei das Schaltrohr um eine zu seiner Längsachse senkrechten Schwenkachse schwenkbar gelagert ist, um das freie Ende des Schaltrohrs in einer ersten Position vor dem ersten Rohranschluss und in einer zweiten Position vor dem zweiten Rohranschluss zu positionieren. Die Rohrweiche umfasst ferner ein Schlittenelement in Form einer Haube, wobei das Schlittenelement das Schaltrohr im Bereich seines freien Endes umgibt und entlang einer Längsachse des Schaltrohres verschiebbar ist, wobei das Schlittenelement zum freien Ende des Schaltrohres hin ein offenes Ende aufweist; und eine Vorspanneinrichtung, die das Schlittenelement in Richtung des freien Endes des Schaltrohres vorspannt, sodass das das offene Ende des Schlittenelements in den ersten und zweiten Positionen des Schaltrohres gegen die das jeweilige Anschlussrohr umgebende Führungsfläche anliegt.

Die erfindungsgemäße Rohrweiche ermöglicht es, den Transport von Schüttgut innerhalb eines Fördersystems effizient zu steuern.

Das Schlittenelement ist in Form einer Haube oder Glocke ausgeführt und umgibt das Schaltrohr im Bereich seines freien Endes. Es deckt den Anschlussbereich zwischen dem Schaltrohr und dem jeweiligen Anschlussrohr ab. Bei der Bewegung des Schlittenelements zwischen der ersten und der zweiten Position gleitet es entlang der Führungsfläche. Die Führungsfläche ist feststehend und kann daher insbesondere Teil eines feststehenden Schlittenabschnitts sein. Die Vorspanneinrichtung drängt das haubenartige Schlittenelement in Richtung des freien Endes des Schaltrohrs und gegen die Führungsfläche. Dadurch wird liegt das Schlittenelement mit seinem offenen Ende in beiden Positionen des Schaltrohrs wie eine Glocke über dem Anschlussbereich und gegen die das jeweilige Anschlussrohr umgebende Führungsfläche an, um gegen den Austritt von Schüttgut zu wirken. Dies minimiert das Risiko von Leckagen und sorgt für eine zuverlässige und effiziente Förderung des Schüttguts innerhalb des Fördersystems.

Die erfindungsgemäße Rohrweiche ist nicht auf zwei Anschlussrohre begrenzt. Die Rohrweiche kann auch so ausgelegt sein, dass sie mehr als zwei Anschlussrohre ansteuern kann, wodurch sie zusätzliche Positionen für das freie Ende des Schaltrohrs bietet.

Nach einer weiteren Ausführungsform der Erfindung ist vorgesehen, dass die Führungsfläche und das offene Ende des Schlittenelements aufeinander abgestimmte Führungsabschnitte aufweisen. Die Führungsabschnitte können dazu beitragen, das Schlittenelement gegen axiale Verdrehung sichern und/oder das Schlittenelement während der Bewegung zwischen den Positionen führen. Dies trägt zur Stabilität und Zuverlässigkeit der Rohrweiche bei und ermöglicht eine gleichmäßige und kontrollierte Positionierung des Schlittenelements. Insbesondere kann die Führungsfläche nach Art eines Schienensystem ausgebildet sein. Das Schlittenelement kann beispielsweise Führungsleisten oder -rillen aufweisen, an die entsprechende Führungsabschnitte der Führungsfläche anliegen. Vorzugsweise erstrecken sich diese Führungsabschnitte entlang von Seitenlinien des Schlittenelements, die parallel zum Verschiebeweg des Schlittenelements verlaufen.

Nach einer weiteren Ausführungsform der Erfindung ist vorgesehen, dass das Schlittenelement an der entgegengesetzten Seite des offenen Endes ein geschlossenes Ende aufweist bzw. geschlossen ist, wobei sich das Schaltrohr durch das geschlossene Ende erstreckt, und wobei eine Dichtung vorgesehen ist, die das geschlossene Ende des Schlittenelements gegen das Schaltrohr abdichtet.

Nach einer weiteren Ausführungsform der Erfindung ist vorgesehen, dass die Führungsfläche in Bezug auf die Schwenkachse des Rohrkörpers bzw. ein Schwenkzentrum, das auf der Schwenkachse liegt, konkav gekrümmt ist und das offene Ende des Schlittenelements eine Lauffläche definiert, die an der Führungsfläche anliegt und die zumindest teilweise der konkaven Form der Führungsfläche folgt. Dies trägt dazu bei, ein gleichbleibendes Anliegen des Schlittenelements an der Führungsfläche sicherzustellen. Außerdem sorgen die gezielten Formgebungen der Führungsfläche und der Lauffläche des Schlittenelements für einen engen Kontakt zwischen dem Schlittenelement und der Führungsfläche, wodurch das Risiko von Leckagen minimiert wird. Die enge Passform reduziert zudem den mechanischen Verschleiß, da die gleichmäßige Druckverteilung zwischen den Oberflächen eine übermäßige Abnutzung verhindert. Dies verlängert die Lebensdauer der Rohrweiche und senkt die Wartungskosten erheblich.

Nach einer weiteren Ausführungsform der Erfindung ist vorgesehen, dass die Führungsfläche in einer Ebene, die senkrecht zur Schwenkachse des Schaltrohres steht, einen ersten Radius R1 aufweist, wobei die ersten und zweiten Radien R1, R2 ein gemeinsames Zentrum aufweisen und der erste Radius (R1) und der zweite Radius (R2) maximal um den Faktor 1/200, vorzugsweise 1/500, besonders bevorzugt 1/1000 voneinander abweichen. Die enge Beziehung zwischen den Radien R1 und R2 sorgt für eine präzise Führung des Schlittenelements und minimiert den Kontaktverlust zwischen dem Schlittenelement und der Führungsfläche. Die engen Toleranzen zwischen den Radien vermeiden effizienzbeeinträchtigende Spaltbildungen, wodurch auch die Funktionalität und Lebensdauer der Rohrweiche erhöht wird.

Nach einer weiteren Ausführungsform der Erfindung ist eine Betätigungsvorrichtung zum Schalten bzw. Bewegen des Schaltrohres in die erste und die zweite Position vorgesehen, wobei die Betätigungsvorrichtung einen, vorzugsweise L-förmigen, Hebel umfasst, der mit einem Ende schwenkbar an das Schaltrohr angelenkt ist und mit einem anderen Ende mit einer Zug-/Druckstange verbunden ist. Als Betätigungsvorrichtung kommen insbesondere elektromechanische oder pneumatische Stellglieder in Betracht. Der Hebel ermöglicht eine effiziente Kraftübertragung, sodass die Schwenkbewegung des Schaltrohrs mit einer geringen Eingabekraft ausgeführt werden kann. Vorzugsweise ist der Hebel L-förmig gestaltet und an einem Träger, wie beispielsweise einem Gehäuse oder einem Rahmen der Rohrweiche, schwenkbar gelagert. Der Hebel kann mit einer am Schaltrohr angebrachten Rohrmanschette verbunden sein. Eine gelenkige Verbindung zwischen dem Hebel und dem Schaltrohr kann so ausgestaltet sein, dass eine Verschiebung der gelenkigen Verbindung entlang des Hebels oder der Rohrmanschette möglich ist.

Nach einer weiteren Ausführungsform der Erfindung ist vorgesehen, dass zwischen dem Schlittenelement und der Rohrmanschette ein oder mehrere Vorspannelemente als Vorspanneinrichtung angeordnet sind, die das Schlittenelement in Richtung der Führungsfläche bzw. dem freien Ende des Schaltrohres drängen. Als Vorspannelemente kommen insbesondere ein oder mehrere Federelemente in Betracht. Die Vorspannelemente sind bevorzugt gleichmäßig um das Schaltrohr herum verteilt.

Nach einer weiteren Ausführungsform der Erfindung ist vorgesehen, dass der Hebel einen ersten Hebelarm und einen zweiten Hebelarm ausbildet und der Hebel zwischen dem ersten und dem zweiten Hebelarm schwenkbar gelagert ist, wobei der erste Hebelarm kürzer ist als der zweite Hebelarm und mit der Zug-/Druckstange verbunden ist. Der längere zweite Hebelarm ist mit dem Schaltrohr verbunden.

Nach einer weiteren Ausführungsform der Erfindung ist vorgesehen, dass die Zug-/Druckstange der Betätigungsvorrichtung zwischen zwei Endpositionen verfahrbar ist, wobei die Endpositionen der Zug-/Druckstange den ersten und der zweiten Position des Schaltrohres zugeordnet sind. Das koordinierte Festlegen der Endpositionen der Zug-/Druckstange und der ersten und zweiten Positionen des Schlittenelements ermöglicht eine genaue Umschaltung des Schaltrohres in die erste und die zweite Position. Außerdem wirken in diesen Endpositionen keine zusätzlichen mechanischen Kräfte auf das Schaltrohr. Dadurch werden unerwünschte Belastungen auf das System minimiert, was eine dauerhaft exakte Positionierung des Schaltrohres unterstützt.

Nach einer weiteren Ausführungsform der Erfindung ist eine Endlagenkontrollanzeige zur Anzeige der jeweiligen Endlage des Schlittenelements vorgesehen, wobei die Endlagenkontrollanzeige vorzugsweise durch Reed-Kontakte realisiert ist. Durch die Integration einer Endlagenkontrollanzeige, z.B. an der Betätigungsvorrichtung oder am Schlittenelement, kann die Position des Schlittenelements in der jeweiligen Endlage zuverlässig überprüft werden. Die Verwendung von Reed-Kontakten bietet eine robuste und wartungsarme Möglichkeit zur Erfassung der Endpositionen, bietet eine sichere und einfache Überwachung des Umschaltvorgangs und trägt zur Betriebssicherheit bei.

In einer weiteren Ausführungsform der Erfindung ist die Endlagenkontrollanzeige mit einer Steuereinheit verbunden ist, die dazu eingerichtet ist, den Transport des Schüttguts durch die Rohrweiche nur dann freizugeben, wenn die jeweilige Endlage des Schlittenelements erreicht ist, d.h. wenn die Endlagenkontrollanzeige ein entsprechendes Signal an die Steuereinheit liefert. Durch die Kopplung der Endlagenkontrollanzeige mit einer Steuereinheit wird ein sicherer Betrieb der Rohrweiche gewährleistet, indem die Schüttgutförderung automatisch blockiert wird, solange das Schlittenelement nicht vollständig in einer der definierten ersten und zweiten Position steht. Diese Funktion minimiert das Risiko von Materialverlusten und Verstopfungen und stellt sicher, dass das Schüttgut erst dann durch das Schaltrohr gefördert wird, wenn eine sichere Verbindung zu den gewünschten Rohranschlüssen gewährleistet ist.

Nach einer weiteren Ausführungsform der Erfindung ist vorgesehen, dass zumindest die Führungsfläche und das Schlittenelement aus Kunststoff gefertigt sind, bevorzugt aus biologisch abbaubaren Kunststoffen. Bevorzugte Kunststoffe sind beispielsweise PE 1000 (Natur) oder PLA-Filament. PE 1000 (Natur) ist ein Polyethylen mit guten Gleiteigenschaften, das sich durch seine hohe Abriebfestigkeit und chemische Beständigkeit auszeichnet. Dies macht es besonders geeignet für Anwendungen in Fördersystemen, bei denen mechanische Belastungen und Gleitreibung auftreten. PLA-Filament betrifft einen Kunststoff, der aus nachwachsenden Rohstoffen, z.B. aus Maisstärke, hergestellt wird. Er ist im 3D-Druck weit verbreitet und bietet ebenfalls gute Gleiteigenschaften sowie eine hohe Oberflächengüte.

Nach einer weiteren Ausführungsform der Erfindung ist vorgesehen, dass das erste Ende des Schaltrohres an ein Förderrohr angeschlossen ist. Nach einer weiteren Ausführungsform der Erfindung ist vorgesehen, dass das erste Ende des Schaltrohres mit einer Rohr-Gelenkverbindung schwenkbar an dem Förderrohr gelagert ist, wobei eines von dem Förderrohr und dem ersten Ende des Schaltrohres mit einem Kugelabschnitt der Rohr-Gelenkverbindung und das andere mit einem Pfannenabschnitt der Rohr-Gelenkverbindung verbunden ist, wobei der Kugelabschnitt zum Schaltrohr hin eine zumindest teilweise abgeschrägte und/oder aufgeweitete Durchgangsöffnung aufweist. Eine solche Kugel-Gelenkverbindung ermöglicht eine flexible Schwenkbewegung des Schaltrohres zwischen der ersten und der zweiten Position. Der Kugelabschnitt ist eine kugelförmige Komponente, die in dem Pfannenabschnitt aufgenommen ist, welcher ihr eine Beweglichkeit um die Achse quer zur Längsrichtung des Schaltrohres erlaubt. Die spezielle Gestaltung der Durchgangsöffnung sorgt dafür, dass der Durchmesser des Durchgangs im Gelenk bei der Umschaltung des Schaltrohres nicht verringert wird. Durch die Abschrägung wird der Fluss des Schüttguts auch bei schräger Stellung des Schaltrohres zum Förderrohr verbessert, was das Risiko von Verstopfungen minimiert und einen gleichmäßigen Durchfluss gewährleistet. Bevorzugt ist das Schaltrohr mit dem Pfannenabschnitt verbunden, während das Förderrohr mit dem Kugelabschnitt verbunden ist.

Nach einer weiteren Ausführungsform der Erfindung ist vorgesehen, dass die Schwenkachse des Schaltrohres gegen translatorische Verschiebungen relativ zur Führungsfläche gesichert ist. Hierzu kann der Kugelabschnitt relativ zur Führungsfläche gegen translatorische Verschiebungen gesichert sein. Dazu kann der Kugelabschnitt relativ zur Führungsfläche ortsfixiert sein, sodass keine Verschiebung des Schwenkzentrums relativ zur Führungsfläche möglich ist. Die Möglichkeit zur Schwenkbewegung des Schaltrohres bleibt erhalten. So kann sichergestellt werden, dass der Mittelpunkt des Kugelabschnitts und das Schwenkzentrum des Schaltrohrs konstant in Bezug auf die Führungsfläche bleiben, was eine präzise und zuverlässige Funktion der Rohrweiche sicherstellt. Eine mögliche Fixierung kann insbesondere an einer Tragstruktur, wie beispielsweise einem Rahmen oder einem Gehäuse, in denen der Kugelabschnitt und die Führungsfläche festgelegt sind, erfolgen.

Nach einer weiteren Ausführungsform der Erfindung ist eine Tragstruktur vorgesehen, wie ein Gehäuse oder ein Rahmen, wobei zumindest die Führungsfläche an der Tragstruktur fixiert ist. Bevorzugt ist die Betätigungsvorrichtung ebenfalls an der Tragstruktur fixiert, was den Vorteil bietet, dass alle bewegungsrelevanten Bauteile stabil und positionsgenau gehalten werden können. Weiter bevorzugt ist der Kugelabschnitt an der Tragstruktur fixiert, was zusätzlich eine präzise Ausrichtung und stabile Führung des Schaltrohrs unterstützt.

Nach einer weiteren Ausführungsform der Erfindung ist vorgesehen, dass das erste Ende des Schaltrohres in einem Abschnitt mit vergrößertem Durchmesser endet und mit dem Pfannenabschnitt verbunden ist. Diese Konstruktion trägt dazu bei, den Durchfluss von Schüttgut durch die Rohrweiche zu verbessern.

### FIGURENBESCHREIBUNG

Die Erfindung wird nachfolgend anhand von Figuren näher erläutert. Die Figuren zeigen ein bevorzugtes Ausführungsbeispiel, auf das die Erfindung jedoch nicht begrenzt ist. Die Figuren und die darin dargestellten Größenverhältnisse sind nur schematisch. Es zeigen:
- FIG. 1: eine Rohrweiche nach einer Ausführungsform der Erfindung in dimetrischer Ansicht;
- FIG. 2: eine schematische Ansicht der Rohrweiche aus Figur 1 in einer seitlichen Schnittansicht;
- FIG. 3: die Rohrweiche aus Figur 2 im Schnitt A-A;
- FIG. 4: die Rohrweiche aus Figur 1 in einer seitlichen Schnittansicht; und
- FIG. 5: die Rohrweiche aus Figur 1 in einer seitlichen Schnittansicht.

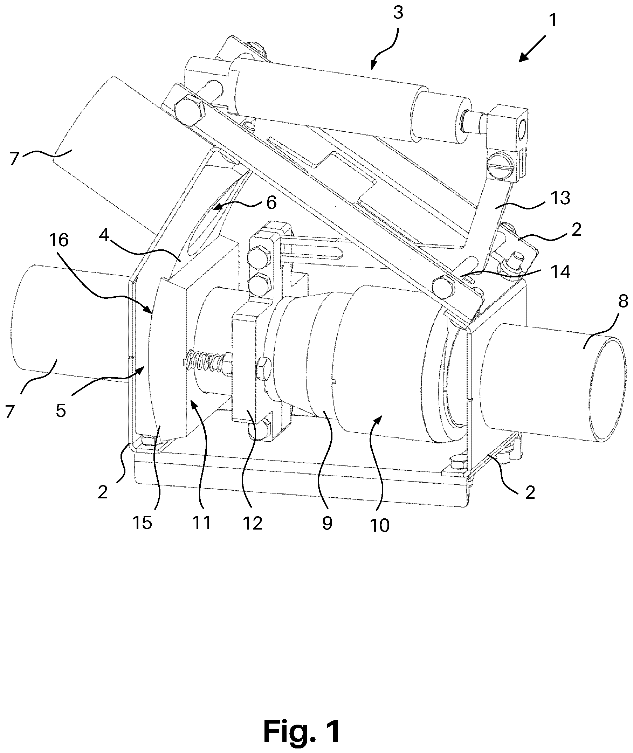

FIG. 1 zeigt eine Rohrweiche 1, die für ein pneumatisches Fördersystem zur Förderung von Schüttgut, beispielsweise Tierfutter einsetzbar ist.

Die Rohrweiche 1 umfasst eine Tragstruktur 2 in Form eines Rahmens. An der Tragstruktur sind eine Betätigungsvorrichtung 3 und eine Führungsfläche 4, die Teil eines feststehenden Schlittenabschnitts ist, fest montiert. In der Führungsfläche 4 sind zwei voneinander beabstandete Öffnungen vorgesehen, die Teil eines ersten Rohranschlusses 5 und eines zweiten Rohranschlusses 6 sind. Im dargestellten Ausführungsbeispiel erstrecken sich der erste Rohranschluss 5 und der zweite Rohranschluss 6 in Form kurzer Rohrstücke 7 von der Außenseite der Tragstruktur 2 weg. Auf der gegenüberliegenden Seite der Rohrweiche ist ein Förderrohr 8 an der Tragstruktur 2 montiert.

Zwischen der Führungsfläche 4 und dem Förderrohr 8 ist ein Schaltrohr 9 angeordnet. Das Schaltrohr 9 ist mit einem ersten Ende 10 an das Förderrohr 8 angeschlossen. Das gegenüberliegende Ende des Schaltrohrs 9 ist ein freies Ende 11.

Auf dem Schaltrohr 9 ist eine Rohrmanschette 12 montiert, die mit einem Hebel 13 der Betätigungsvorrichtung 3 verbunden ist. Der Hebel 13 ist über einen Schwenklagerung 14 an der Tragstruktur 2 befestigt.

Am freien Ende 11 des Schaltohres 9 ist ein Schlittenelement 15 in Form einer Haube angeordnet. Das Schlittenelement 15 umgibt das Schaltrohr 9 und ist in Richtung des ersten Endes 10 des Schaltrohres 9 geschlossen. Das andere Ende des Schlittenelements 15, das zur Führungsfläche 4 gerichtet ist, ist ein offenes Ende 16. Das Schlittenelement 15 ist entlang des Schaltrohres 9 axial verschiebbar.

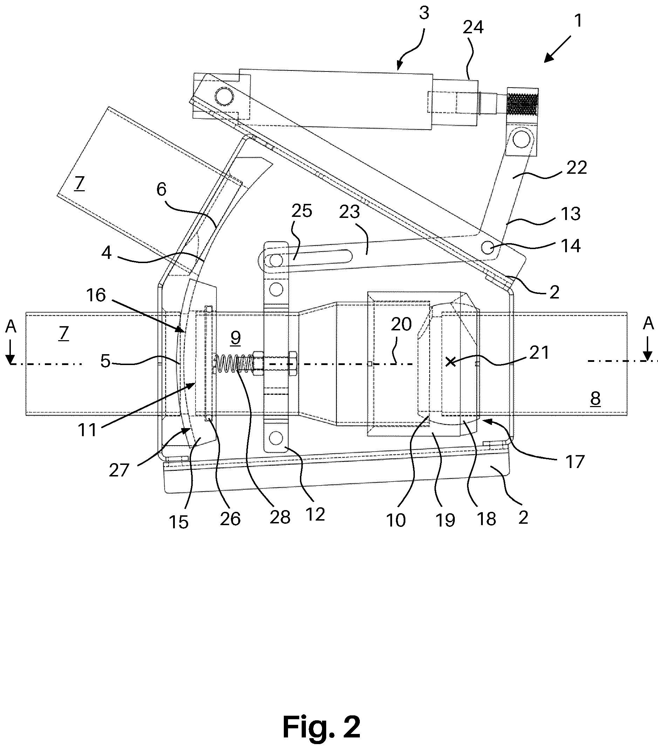

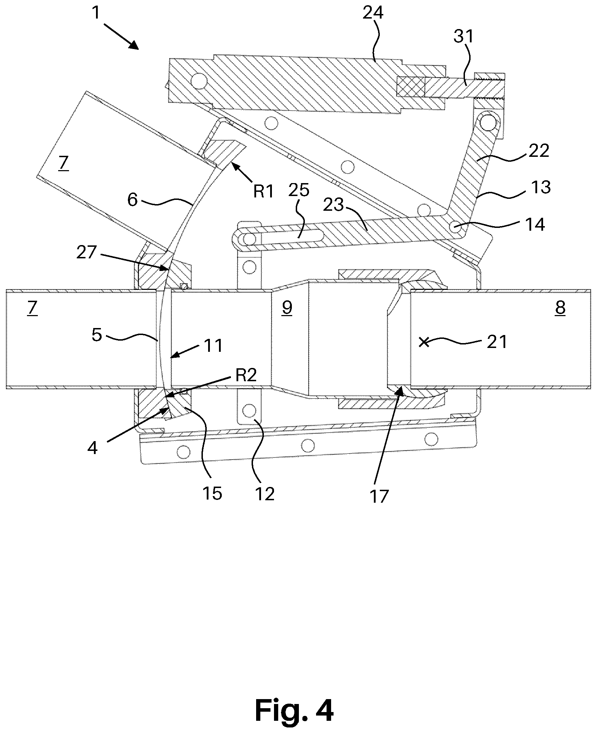

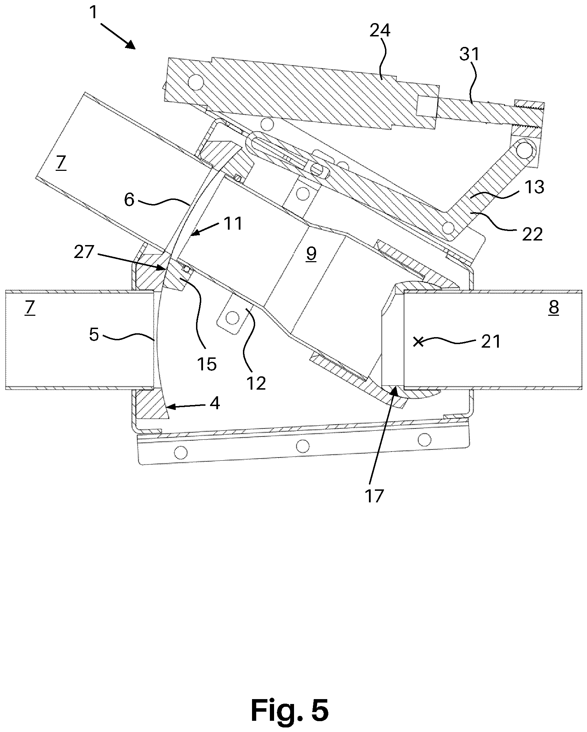

FIG. 2 ist schematische Ansicht der Rohrweiche aus Figur 1 in einer seitlichen Schnittansicht. Die Schnittansicht zeigt eine Rohr-Gelenkverbindung 17, die das erste Ende 10 des Schaltrohres 9 mit dem Förderrohr 8 koppelt. Die Rohr-Gelenkverbindung 17 umfasst einen Kugelabschnitt 18, der mit dem Förderrohr 8 verbunden ist sowie einen Pfannenabschnitt 19, in den das erste Ende 10 des Schaltrohres 9 gesteckt ist. Durch die Rohr-Gelenkverbindung 17 ist das Schaltrohr 9 um eine zu seiner Längsachse 20 senkrechten Schwenkachse 21 schwenkbar gelagert. Die Schwenkachse 21 liegt im Schwenkzentrum der Rohr-Gelenkverbindung 17. Dadurch kann das freie Ende 11 des Schaltohres 9 wahlweise am ersten Rohranschluss 5 und am zweiten Rohranschluss 6 positioniert werden (vgl. Figuren 4 und 5). Um das freie Ende 11 des Schaltohres 9 wahlweise in einer ersten Position am ersten Rohranschluss 5 und in einer zweiten Position am zweiten Rohranschluss 6 zu positionieren, wird die Betätigungsvorrichtung 3 verwendet, die über die Rohrmanschette 12 und den Hebel 13 das Schaltrohr 9 um die Schwenkachse 21 verschwenken kann.

Der Hebel 13 der Betätigungsvorrichtung 3 ist an der Schwenklagerung 14 an der Tragstruktur 2 befestigt und bildet von diesem Schwenkzentrum ausgehend einen ersten Hebelarm 22 und einen zweiten Hebelarm 23 aus. Der erste Hebelarm 22 ist kürzer als der zweite Hebelarm 23 und ist mit einem pneumatischen Stellglied 24 der Betätigungsvorrichtung 3 gekoppelt. Der zweite Hebelarm 23 ist mit der Rohrmanschette 12 verbunden, wobei der Verbindungspunkt zwischen zweitem Hebelarm 23 und Rohrmanschette 12 in einem in dem zweiten Hebelarm 23 ausgebildeten Langloch 25 verschiebbar geführt ist.

Das Schlittenelement 15 ist am vorderen Ende 11 des Schaltrohres 9 positioniert, wobei sich das Schaltrohr 9 durch das hintere, von der Führungsfläche 4 abgewandte Ende des Schlittenelements 15 erstreckt. Das Schlittenelement 15 ist auf dem Schaltrohr 9 relativ zu diesem axial, d.h. entlang der Längsachse 20 verschiebbar. Zur rückwärtigen Abdichtung des Schlittenelements 15 ist zwischen Schaltrohr 9 und Schlittenelement 15 eine Ringdichtung 26 montiert. Die Führungsfläche 4 weist eine zum Schwenkzentrum der Rohr-Gelenkverbindung 17 hin bzw. zur Schwenkachse 21 hin konkave Form auf. Das offene Ende 16 des Schlittenelements 15 definiert eine Lauffläche 27, die an der Führungsfläche 4 aufliegt. Die Lauffläche 27 folgt einer der Führungsfläche 4 entsprechenden Form. Die Linie, der die Form der Lauffläche 27 folgt, ist zur Führungsfläche 4 hin gewölbt, also konvex.

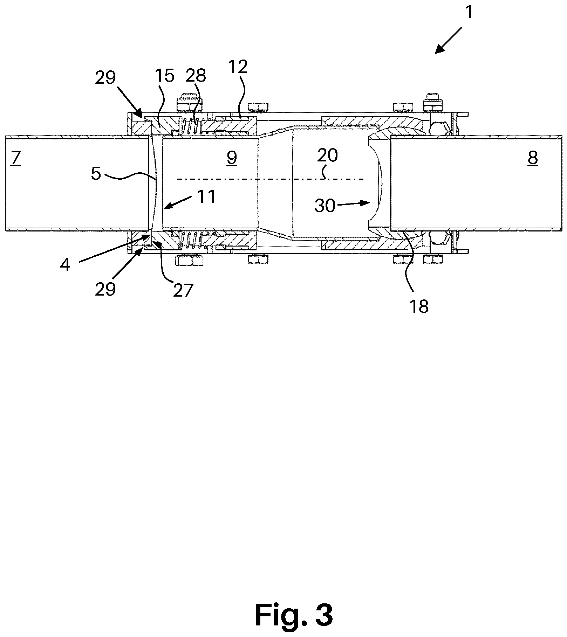

FIG. 3 zeigt die Rohrweiche aus Figur 2 im Schnitt A-A.

Zwischen dem Schlittenelement 15 und der Rohrmanschette 12 ist eine Vorspanneinrichtung angeordnet, die Federn 28 umfasst. Die Federn 28 sind auf gegenüberliegenden Seiten des Schaltrohres 9 angeordnet und spannen das Schlittenelement 15 in Richtung Lauffläche 4 vor, so dass die Lauffläche 27 gegen die Führungsfläche 4 gedrängt wird. Da das freie Ende 11 des Schaltrohres 9 am ersten Rohranschluss 5 positioniert ist, deckt das haubenartige Schlittenelement 15 den Verbindungsbereich zwischen dem ersten Rohranschluss 5 und dem freien Ende 11 des Schaltrohres 9 nach Art einer aufgesetzten Glocke ab. Dadurch wird der Verbindungsbereich geschlossen.

Das Schlittenelement 15 und die Führungsfläche 4 weisen aufeinander abgestimmte Führungsabschnitte 29 auf, die das Schlittenelement 15 gegen Verdrehung um die Längsachse 20 des Schaltrohres 9 sichern und die Führung zwischen der ersten Position und der zweiten Position sicherstellen.

Der Kugelabschnitt 18 der Gelenkverbindung weist zum Schaltrohr 9 hin eine teilweise aufgeweitete Durchgangsöffnung 30 aufweist.

FIG. 4 und FIG. 5 stellen die Rohrweiche aus Figur 1 in unterschiedlichen Schaltpositionen dar.

FIG. 4 zeigt eine Ausgangslage, in der das Schaltrohr 9 in der ersten Position mit seinem freien Ende 11 vor dem ersten Rohranschluss 5 positioniert ist.

Die Lauffläche 27 des Schlittenelements 15 wird über die Vorspanneinrichtung (nicht dargestellt) gegen die Führungsfläche 4 gedrückt, so dass das Schlittenelement den Verbindungsbereich zwischen dem ersten Rohranschluss 5 und dem freien Ende und offenen Ende des Schaltrohr 9 abdeckt. Über das Förderrohr 8 kann mittels Druckluft (ca. 0,5 bar) Schüttgut in die Rohrweiche 1 gefördert werden, wobei das Schüttgut von dem Förderrohr 8 durch das Schaltrohr 9 in den ersten Rohranschluss 5 und in dessen Rohrstück 7 gefördert wird. Der erste Rohranschluss 5 ist mit einem ersten Zielort verbunden.

Wenn das Schüttgut an einen anderen Zielort gefördert werden soll, der mit dem zweiten Rohranschluss 6 verbunden ist, wird das Schaltrohr in die zweite Position vor dem zweiten Rohranschluss 6 verfahren (so in Figur 5 gezeigt). Dazu wird die Betätigungsvorrichtung 3 betätigt. Das pneumatische Stellglied 24 der Betätigungsvorrichtung 3 wird mit 5-6 bar Luftdruck betrieben und umfasst eine ein- und ausfahrbare Zug-/Druckstange 31, die mit dem ersten Hebelarm 22 des Hebels 13 verbunden ist. In der ersten Position des Schaltrohres 9 (Figur 4) ist die Zug-/Druckstange 31 vollständig eingefahren. In der zweiten Position des Schaltrohres 9 (Figur 5) ist die Zug-/Druckstange 31 vollständig ausgefahren.

Wenn die Zug-/Druckstange 31 ausgehend von Figur 4 ausgefahren wird, wird die axiale Bewegung der Zug-/Druckstange 31 in eine Schwenkbewegung des Hebels 13 um die Schwenklagerung 14 überführt. Da der erste Hebelarm 22 kürzer ist als der zweite Hebelarm 23, wird die mit dem zweiten Hebelarm 23 gekoppelte Rohrmanschette 12 um einen vergrößerten Weg als der Stellweg der Zug-/Druckstange 31 um das Schwenkzentrum 21 in Richtung des zweiten Rohranschlusses 6 verschwenkt. Das Langloch 25 stellt einen notwendigen Freiheitsgrad für die Schaltbewegung zur Verfügung. Dabei wird das freie Ende 11 des Schaltrohres 9 entlang der Führungsfläche 4 in Richtung zweiter Rohranschluss 6 bewegt. Die Lauffläche 27 des Schlittenelements 15 gleitet dabei entlang der Führungsfläche 4. Die konkave Führungsfläche 4 und die ihr gegenüber konvexe Lauffläche 27 folgen nahezu dem gleichen Radius R1 und R2. Der Radius R1 der Lauffläche 4 und der Radius R2 der Lauffläche 27 weisen ein gemeinsames Zentrum auf, dass im Schwenkzentrum bzw. auf der Schwenkachse 21 des Schaltrohres 9 liegt.

FIG. 5 zeigt das Schaltrohr 9 in der zweiten Position mit seinem freien Ende 11 vor dem zweiten Rohranschluss 6. Die Lauffläche 27 des Schlittenelements 15 wird über die Vorspanneinrichtung (nicht dargestellt) gegen die Führungsfläche 4 gedrückt, so dass der Verbindungsbereich zwischen dem zweiten Rohranschluss 6 und dem Schaltrohr 9 abgedeckt ist. Über das Förderrohr 8 gelangt Schüttgut durch das Schaltrohr 9 in den zweiten Rohranschluss 6 und in dessen Rohrstück 7. Der zweite Rohranschluss 6 ist mit einem zweiten Zielort verbunden. In der zweiten Position des Schaltrohres 9 ist die Zug-/Druckstange 31 vollständig ausgefahren.

### Bezugszeichenliste

- 1: Rohrweiche
- 2: Tragstruktur
- 3: Betätigungsvorrichtung
- 4: Führungsfläche
- 5: erster Rohranschluss
- 6: zweiter Rohranschluss
- 7: Rohrstück
- 8: Förderrohr
- 9: Schaltrohr
- 10: erstes Ende des Schaltrohres
- 11: zweites (freies) Ende des Schaltrohres
- 12: Rohrmanschette
- 13: Hebel
- 14: Schwenklagerung
- 15: Schlittenelement
- 16: offenes Ende des Schlittenelements
- 17: Rohr-Gelenkverbindung
- 18: Kugelabschnitt
- 19: Pfannenabschnitt
- 20: Längsachse des Schaltrohrs
- 21: Schwenkachse / Schwenkzentrum
- 22: erster Hebelarm
- 23: zweiter Hebelarm
- 24: Stellglied der Betätigungsvorrichtung
- 25: Langloch im zweiten Hebelarm
- 26: Ringdichtung
- 27: Lauffläche
- 28: Federn

- 29: Führungsabschnitte
- 30: Durchgangsöffnung
- 31: Zug-Druckstange

## Patentansprüche

1. Rohrweiche (1) für strömungsbasierte Fördersysteme, insbesondere für pneumatische Systeme, zur Förderung von Schüttgut, umfassend ein Schaltrohr (9) mit einem ersten Ende (10) und einem von dem ersten Ende abgewandten zweiten, freien Ende (11),
einen ersten Rohranschluss (5) und einen zweiten Rohranschluss (6), die in einer Führungsfläche (4) vorgesehen sind,
wobei das Schaltrohr (9) um eine zu seiner Längsachse (20) senkrechten Schwenkachse (21) schwenkbar gelagert ist, um das freie Ende (11) des Schaltrohrs (9) in einer ersten Position vor dem ersten Rohranschluss (5) und in einer zweiten Position vor dem zweiten Rohranschluss (6) zu positionieren,
ein Schlittenelement (15) in Form einer Haube, wobei das Schlittenelement (15) das Schaltrohr (9) im Bereich seines freien Endes (11) umgibt und entlang der Längsachse (20) des Schaltrohres (9) verschiebbar ist, wobei das Schlittenelement (15) zum freien Ende (11) des Schaltrohres (9) hin ein offenes Ende (16) aufweist, und
eine Vorspanneinrichtung (28), die das Schlittenelement (15) in Richtung des freien Endes (11) des Schaltrohres (9) vorspannt, sodass das das offene Ende (16) des Schlittenelements (15) in den ersten und zweiten Positionen des Schaltrohres (9) gegen die das jeweilige Anschlussrohr (5, 6) umgebende Führungsfläche (4) anliegt.

2. Rohrweiche (1) nach Anspruch 1, wobei die Führungsfläche (4) und das offene Ende (16) des Schlittenelements (15) aufeinander abgestimmte Führungsabschnitte (29) aufweisen.

3. Rohrweiche (1) nach einem der vorhergehenden Ansprüche, wobei das Schlittenelement (15) an der entgegengesetzten Seite des offenen Endes (16) ein geschlossenes Ende aufweist, durch das sich das Schaltrohr (9) erstreckt, und wobei eine Dichtung (26) vorgesehen ist, die das geschlossene Ende des Schlittenelements (15) gegen das Schaltrohr (9) abdichtet.

4. Rohrweiche (1) nach einem der vorhergehenden Ansprüche, wobei die Führungsfläche (4) in Bezug auf die Schwenkachse (21) des Rohrkörpers (9) konkav gekrümmt ist und das offene Ende (16) des Schlittenelements (15) eine Lauffläche (27) definiert, die an der Führungsfläche (4) anliegt und zumindest teilweise der konkaven Form der Führungsfläche (4) folgt.

5. Rohrweiche (1) nach Anspruch 4, wobei die Führungsfläche (4) einen ersten Radius (R1) aufweist und die Lauffläche (27) des Schlittenelements (15) einem zweiten Radius (R2) folgt, wobei die ersten und zweiten Radien (R1, R2) ein gemeinsames Zentrum (21) aufweisen und der erste Radius (R1) und der zweite Radius (R2) maximal um den Faktor 1/200, vorzugsweise 1/500, besonders bevorzugt 1/1000 voneinander abweichen.

6. Rohrweiche (1) nach einem der vorhergehenden Ansprüche, ferner aufweisend eine Betätigungsvorrichtung (3) zum Schalten des Schaltrohres (9) in die erste Position und in die zweite Position, wobei die Betätigungsvorrichtung (3) einen, vorzugsweise L-förmigen, Hebel (13) umfasst, der mit einem Ende schwenkbar an das Schaltrohr (9) angelenkt ist und der mit einem anderen Ende mit einer Zug-/Druckstange (31) verbunden ist.

7. Rohrweiche (1) nach Anspruch 6, wobei der Hebel (13) einen ersten Hebelarm (22) und einen zweiten Hebelarm (23) ausbildet und der Hebel (13) zwischen dem ersten und dem zweiten Hebelarm (22, 23) schwenkbar gelagert ist, wobei der erste Hebelarm (22) kürzer ist als der zweite Hebelarm (23) und mit der Zug-/Druckstange (31) verbunden ist.

8. Rohrweiche (1) nach Anspruch 6 oder 7, wobei die Zug-/Druckstange (31) zwischen zwei Endpositionen verfahrbar ist, wobei die Endpositionen der Zug-/ Druckstange (31) den ersten und der zweiten Positionen des Schaltrohres (9) zugeordnet sind.

9. Rohrweiche (1) nach einem der vorhergehenden Ansprüche, ferner aufweisend eine Endlagenkontrollanzeige zur Anzeige der jeweiligen Endlage des Schlittenelements (15), wobei die Endlagenkontrollanzeige vorzugsweise durch Reed-Kontakte realisiert ist.

10. Rohrweiche (1) nach einem der vorhergehenden Ansprüche, wobei zumindest die Führungsfläche (4) und das Schlittenelement (15) aus Kunststoff gefertigt sind, bevorzugt aus PE 1000 (Natur) oder PLA-Filament.

11. Rohrweiche (1) nach einem der vorhergehenden Ansprüche, wobei das erste Ende (10) des Schaltrohres (9) an ein Förderrohr (8) angeschlossen und mit einer Rohr-Gelenkverbindung (17) schwenkbar an dem Förderrohr (8) gelagert ist, wobei eines von dem Förderrohr (8) und dem ersten Ende (10) mit einem Kugelabschnitt (18) der Rohr-Gelenkverbindung (17) und das andere mit einem Pfannenabschnitt (19) der Rohr-Gelenkverbindung (17) verbunden ist; wobei der Kugelabschnitt (18) zum Schaltrohr (9) hin eine zumindest teilweise abgeschrägte und/oder aufgeweitete Durchgangsöffnung (30) aufweist.

12. Rohrweiche (1) nach Anspruch 11, wobei das erste Ende (10) des Schaltrohres (9) in einem Abschnitt mit vergrößertem Durchmesser endet und mit dem Pfannenabschnitt (19) verbunden ist.

13. Rohrweiche (1) nach einem der vorhergehenden Ansprüche, wobei die Schwenkachse (21) des Schaltrohres (9) gegen translatorische Verschiebungen relativ zur Führungsfläche (4) gesichert ist.

14. Rohrweiche (1) nach einem der vorhergehenden Ansprüche, ferner umfassend Tragstruktur (2), wie ein Gehäuse oder einen Rahmen, wobei die Führungsfläche (4) an der Tragstruktur (2) fixiert ist.
